# EUROPEAN PATENT APPLICATION

(11) **EP 2 131 024 A2**
(43) Date of publication of application: **09.12.2009**
(21) Application number: 09161331.5
(22) Date of filing: 28.05.2009
(51) Int. Cl.: F02B 31/06

(54) **Structure of airflow control system**

(30) Priority: 02.06.2008 JP 2008144697
(71) Applicant: AISIN SEIKI KABUSHIKI KAISHA, Kariya-shi, Aichi-ken 448-8650 (JP)
(72) Inventor: Konakawa, Hidefumi, Kariya-shi Aichi 448-8650 (JP)
(74) Representative: TBK-Patent

(57) **Abstract**

A structure of an airflow control system includes a vortex control valve (10) located in an intake passage (6) and generating a vortex in a combustion cylinder (3A) upon intake of air-fuel mixture for combustion, the intake passage (6) supplying the air-fuel mixture to the combustion cylinder (3A), and a return flow passage (8) for returning a portion of exhaust gas generated by the combustion of the air-fuel mixture in the combustion cylinder (3A) to the intake passage (6), wherein a merge portion (9) where the return flow passage (8) merges with the intake passage (6) is located downstream of a mounting position of the vortex control valve (10) between the mounting position of the vortex control valve (10) and the combustion cylinder (3A).

## Description

### FIELD OF THE INVENTION

The present invention relates to a structure of an airflow control system.

### BACKGROUND

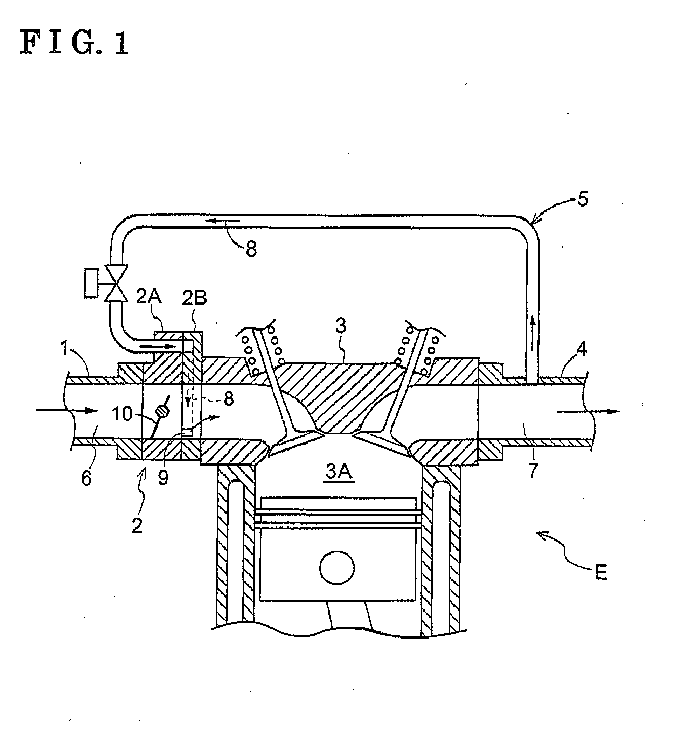

Conventionally, a structure of an airflow control system where a swirl control valve is employed as a vortex control valve and a structure where a tumble control valve is employed as a vortex control valve are known. The former is described for example in JP09-228844A (hereinafter referred to as Reference 1), Fig. 1, and the latter is described for example in US005640941 (hereinafter referred to as Reference 2), Fig.,1. Both vortex control valves are structured so that an air-fuel mixture is induced to one side of an intake passage under a condition that a flow passage is throttled to generate strong vortexes. The structure according to the airflow control system of Reference 1, Fig. 1, where the swirl control valve is employed, includes a return flow passage through which a portion of exhaust gas is returned to an induction system. As a result, a peak combustion temperature is decreased, and thus an amount of nitric oxide generated during combustion is reduced. In this structure, a merging portion where the return flow passage merges with the intake passage is located upstream of a mounting position of the swirl control valve. Consequently, the air-fuel mixture including the exhaust gas that is returned from the return flow passage passes through the swirl control valve.

According to the known structure of the airflow control system, the merging portion where the return flow passage merges with the intake passage is located upstream of the mounting position of the vortex control valve. Accordingly, the air-fuel mixture including the exhaust gas returned from the return flow passage passes through the vortex control valve. Since the exhaust gas returning to the intake passage through the return flow passage includes floating particles generated by combustion, it is highly likely that the floating particles accumulate around the vortex control valve or adhere to the vortex control valve. As a result, the vortex control valve might malfunction or the intake passage might be blocked at the mounting position of the vortex control valve.

A need thus exists for a structure of an airflow control system, where environmental conditions of a mounting position of a vortex control valve are maintained normal with ease.

### SUMMARY OF THE INVENTION

According to an aspect of the present invention, a structure of an airflow control system includes a vortex control valve located in an intake passage and generating a vortex in a combustion cylinder upon intake of air-fuel mixture for combustion, the intake passage supplying the air-fuel mixture to the combustion cylinder, and a return flow passage for returning a portion of exhaust gas generated by the combustion of the air-fuel mixture in the combustion cylinder to the intake passage, wherein a merge portion where the return flow passage merges with the intake passage is located downstream of a mounting position of the vortex control valve between the mounting position of the vortex control valve and the combustion cylinder.

Due to the above-described structure, the merging portion where the return flow passage merges with the intake passage is located downstream of the mounting position of the vortex control valve between the mounting position of the vortex control valve and the combustion cylinder. Therefore, the exhaust gas discharged from the return flow passage to the intake passage is delivered to each of the combustion cylinders via downstream of the vortex control valve without passing therethrough. Consequently, floating particles in the exhaust gas are prevented from accumulating in the mounting position of the vortex control valve or adhering to the vortex control valve. As a result, environmental conditions of the mounting position of the vortex control valve are maintained normal, which prevents the vortex control valve from malfunctioning due to the floating particles and preventing the intake passage from being blocked by the floating particles at the mounting position of the vortex control valve.

According to another aspect of the present invention, the vortex control valve includes an induction mechanism for inducing the air-fuel mixture to one portion of the intake passage in a radial direction of the intake passage under a condition that a flow of the air-fuel mixture is throttled and the merge portion is formed on a wall of the intake passage so as to open in a direction of another portion of the passage different from the one portion.

Due to the above-described structure, the flow of the air-fuel mixture that has a vortex generation enhancing effect and passes through the vortex control valve, and a return flow of the exhaust gas discharged from the merging portion located downstream of the vortex control valve are divided in the radial direction of the intake passage, and that mutual interference is prevented.

According to another aspect of the present invention, the structure of the airflow control system includes a first plate member and a second plate member assembled on each other and located between a cylinder head and an intake manifold, wherein the vortex control valve, the return flow passage and the merge portion are provided between the first plate member and the second plate member.

By providing the vortex control valve, the retum flow passage and the merging portion on the first and second plate members, space-saving and assemble efficiency are improved compared to a structure where a vortex control valve, a return flow passage and a merging portion are individually provided.

According to another aspect of the present invention, the first plate member and the second plate member respectively include a through hole H for forming the intake passage.

According to another aspect of the present invention, the structure of the airflow control includes a plate member located between the cylinder head and the intake manifold, wherein the vortex control valve, the return flow passage and the merge portion are provided on the plate member.

### BRIEF DESCRIPTION OF THE DRAWINGS

The foregoing and additional features and characteristics of the present invention will become more apparent from the following detailed description considered with the reference to the accompanying drawings, wherein:

Fig. 1 is a schematic diagram of main parts of an engine;

Fig. 2 is a cross sectional view of an airflow control system according to a first embodiment of the present invention;

Fig. 3 is a front view of a plate member according to the first embodiment of the present invention;

Fig. 4 is an exploded perspective view of the plate member according to the first embodiment of the present invention;

Fig. 5 is a cross sectional view of the airflow control system according to a second embodiment of the present invention; and

Fig. 6 a cross sectional view of the airflow control system according to a third embodiment of the present invention.

### DETAILED DESCRIPTION

A first embodiment of the present invention will be explained with reference to the illustrations as follows.

Fig. 1 illustrates main parts of an engine E, where a structure of an airflow control system of the first embodiment is employed. An inline four-cylinder engine is illustrated as an example here. The main parts of the engine E include an intake manifold 1, an airflow control system 2, a cylinder head 3, an exhaust manifold 4 and an exhaust gas recirculation system 5. An intake passage 6 is established from the intake manifold 1 to the cylinder head 3 via the airflow control system 2. An exhaust passage 7 is established from the cylinder head 3 to the exhaust manifold 4. A return flow passage 8 of the exhaust gas recirculation system 5 is provided so as to diverge from the exhaust passage 7 to the intake passage 6.

In the first embodiment, the intake manifold 1 is made of synthetic resin. The intake manifold 1 is structured to include an intake passage that passes through an air filter and through a fuel injector, and that is divided into four intake passages each of which leads to a corresponding combustion cylinder 3A.

The cylinder head 3 is made of metal and includes the four combustion cylinders 3A. In each of the combustion cylinders 3A, a cycle of intake, compression, fire, and exhaust takes place repeatedly to generate a driving force to rotate a crankshaft. The intake manifold 1 is connected to the cylinder head 3, on a side on which the intake passage 6 is located, so as to communicate with the cylinder head 3 via the airflow control system 2. In the meantime, the exhaust manifold 4 is connected to the cylinder head 3, on a side on which the exhaust passage 7 is located, so as to communicate with the cylinder head 3.

The exhaust gas recirculation system 5 is structured to include the return flow passage 8 and a CPU controls the recirculation of exhaust gas by regulating a flow of the exhaust gas returned to the return flow passage 8. A merging portion 9 where the return flow passage 8 merges with the intake passage 6 is provided on the airflow control system 2.

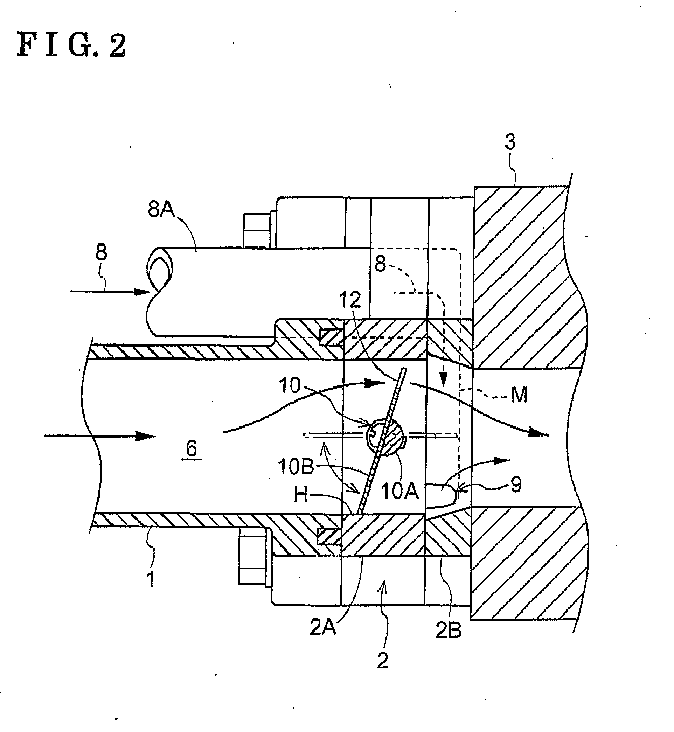

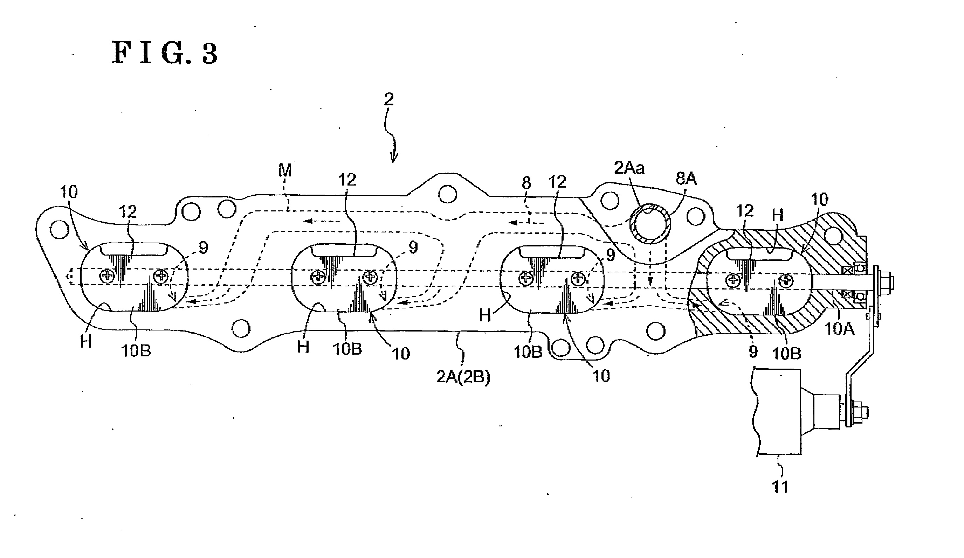

As shown in Fig. 2, the airflow control system 2 is structured to include a first plate member 2A and a second plate member 2B assembled on each other, and located between the cylinder head 3 and the intake manifold 1. The airflow control system 2 further includes vortex control valves 10 provided in the first plate member 2A, a drive mechanism 11 (shown in Fig. 3) for driving the vortex control valves 10, and the merging portions 9 formed on the second plate member 2B. A CPU controls operation of the airflow control system 2.

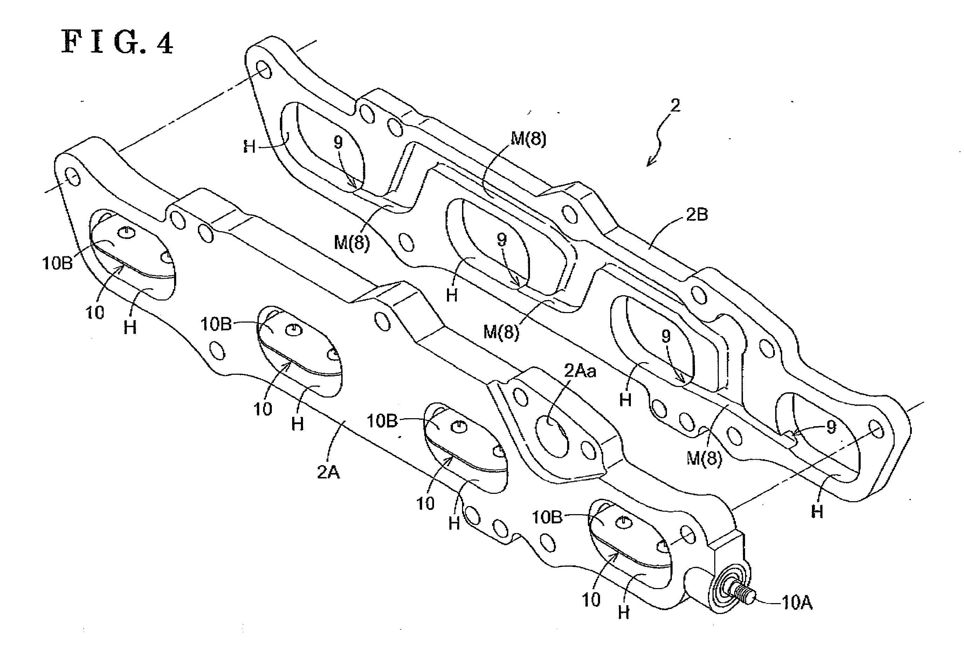

As shown in Figs. 3 and 4, the first and second plate members 2A, 2B are each formed to have an elongated shape that conforms to an arrangement of the combustion cylinders 3A, and to include thereon through holes H serving as the four intake passages 6. The plate member 2A is provided with the vortex control valves 10 and is located upstream of the plate member 2B. The plate member 28 is provided with the return flow passage 8 and the merging portion 9, and is located downstream of the plate member 2A. That is, the merging portion 9, where the return flow passage 8 merges with the intake passage 6, is located downstream of a mounting position of the vortex control valve 10 between the mounting position of the vortex control valve 10 and the combustion cylinder 3A. The first and second plate members 2A, 2B are assembled on each other to be one piece in a sandwiched condition by the intake manifold 1 and the cylinder head 3.

The vortex control valve 10 of the first embodiment is, for example, a tumble (longitudinal vortex) control valve. As shown in Fig. 3, each of the vortex control valves 10 is structured to include a valve vane 10B having an elliptic shape and mounted on a position facing the corresponding intake passage 6. The vortex control valves 10 also include a valve shaft 10A inserted through the first plate member 2A in a lengthwise direction thereof. The drive mechanism 11, such as a DC motor, is connected to the valve shaft 10A via a link mechanism so as to drive the valve shaft 10A to rotate. Consequently, an angle of the valve vane 10B in the through hole H is changed when the valve shaft 10A is actuated by the drive mechanism 11 and rotates about a rotation axis of the valve shaft 10A. As a result, the intake passage 6 is throttled and unthrottled. The valve vane 10B is provided with a wide U-shaped notch 12 formed on an upper peripheral portion of the valve vane 10B in a radial direction of the intake passage 6. Accordingly, as shown in Fig, 2, when the intake passage 6 is throttled by rotating the valve shaft 10A, thereby moving the valve vane 10B in a direction to block the intake passage 6, a flow of the air-fuel mixture is concentrated in the wide U-shaped notch 12 (in an upper portion of the intake passage 6 in the radial direction thereof) and thus a flow speed of the air-fuel mixture is increased. Then, the air-fuel mixture having an increased flow speed is delivered to a combustion chamber. As a result, tumbles are generated in the combustion chamber. That is, in the first embodiment, the wide U-shaped notch 12 constitutes an induction mechanism for inducing the air-fuel mixture to the upper portion of the intake passage 6 in the radial direction thereof under a condition that the intake passage 6 is throttled. The first plate member 2A further includes a pipe connecting portion 2Aa to which an end portion of a return pipe 8A establishing the return flow passage 8 is connected (shown in Fig. 3). The airflow control system 2 is structured so that the return flow passage 8 established inside the return pipe 8A communicates with the return flow passage 8 established on the surface of the second plate member 2B by connecting the return pipe 8A to the pipe connecting portion 2Aa.

In the meantime, as shown in Fig. 4, the second plate member 2B is provided with a groove M formed on a surface which mates with the first plate member 2A. By having the first and second plate members 2A, 2B mated together to establish a hermetically sealed condition, the groove M serves as the return flow passage 8 and open ends of the groove M, except one open end from which the groove M starts, serve as the merging portions 9. The groove M starts from a position located on the second plate member 2B corresponding to the pipe connecting portion 2Aa, and branches off to each of the four through holes H. Each termination end of the groove M is formed to have an opening that opens in a direction of a lower portion of the through hole H, that is, the intake,passage 6 in the radial direction thereof. The openings serve as the merging portions 9 facing the intake passages 6. Diameters of the openings are set so that the merging portion 9 located farthest from the starting end of the groove M has the largest diameter and the merging portion 9 located closest to the starting end of the groove M has the smallest diameter. This is for reducing a possibility of variation in an amount of the exhaust gas discharged from the merging portion 9 into the intake passage 6, among the merging portions 9, that is, for allowing each merging portion 9 to discharge substantially same amount of exhaust gas.

According to the structure of the airflow control system of the first embodiment, as shown in Fig. 2, the exhaust gas in the return flow passage 8 is returned to the intake passage 6 and the vortex valve 10 is controlled so that the intake passage 6 is throttled. Consequently, floating particles in the exhaust gas are prevented from causing malfunction of the vortex control valve 10 and from blocking the intake passage 6 at the mounting position of the vortex control valve 10, and an efficient combustion is achieved without impairing a vortex generation function in the combustion cylinder 3A. That is, the floating particles are prevented from accumulating in the mounting position of the vortex control valve 10 or adhering to the vortex control valve 10 because the exhaust gas is discharged from the return flow passage 8 to the intake flow passage 6 via the merging portion 9 located downstream of the vortex control valve 10, and then delivered to the combustion cylinder 3A. As a result, environmental conditions of the mounting position of the vortex control valve 10 are maintained normal. The flow of the air-fuel mixture having a vortex generation enhancing effect and passing through the vortex control valve 10, and a return flow of the exhaust gas discharged from the merging portion 9 located downstream of the vortex control valve 10 are divided in the radial direction of the intake passage 6 in order to prevent mutual interference. Consequently, the air-fuel mixture induced to one portion of the intake passage 6 in the radial direction thereof by the induction mechanism is delivered to the combustion cylinder 3A without being damped, and at the same time, the return flow of the exhaust gas merges with the air-fuel mixture. In addition, the vortex control valve 10, the intake passage 6, the return flow passage 8 and the merging portion 9 are all provided on the first and second plate member 2A, 2B, thereby saving space and facilitating assemble efficiency.

Second and third embodiments of the present invention will be explained as follows.

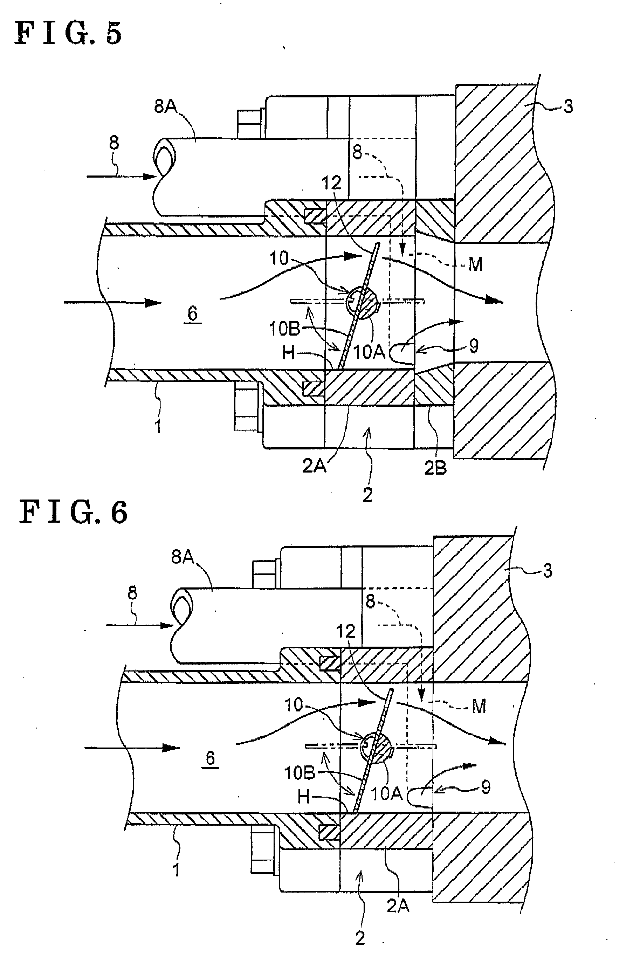

The structure of the airflow control system of the first embodiment is applied not only to the engine structure previously described but it may also be applied to other types of internal combustion engines operating on diesel fuel or other fuels, or to engines having any other number of cylinders. The vortex control valve 10 may have other shapes, configurations, or structures than those described in the first embodiment. A swirl control valve may also be applied instead of the tumble control valve. A position or shape of the wide U-shaped notch 12 formed on the valve vane 10B may be appropriately modified. In essence, the vortex control valve 10 needs to be located upstream of the merging portion 9 where the return flow-passage 8 merges with the intake passage 6. Also, it is ideal that the wide U-shaped notch is located one portion of the intake passage 6 in the radial direction thereof and the merging portions 9 is located on another portion of the passage 6, rather than they are located on the same portion. In the first embodiment, the airflow control system 2 includes the first and second plate members 2A, 2B, and the groove M serving as the return flow passage 8 is formed on the second plate member 2B. However, the airflow control system 2 may include other structures where, for example, the groove M is formed on the first plate member 2A as shown in Fig. 5. Alternatively, the airflow control system 2 may be structured to include only the first plate member 2A as shown in Fig. 6 instead of the first and second plate members 2A, 2B. In this case, a number of parts is reduced.

The reference numbers used in the embodiments are for convenience of referencing to the drawings, and the present invention is not limited to the structures shown in the drawings. The present invention may be embodied in various forms without departing from the scope of the invention.
A structure of an airflow control system includes a vortex control valve (10) located in an intake passage (6) and generating a vortex in a combustion cylinder (3A) upon intake of air-fuel mixture for combustion, the intake passage (6) supplying the air-fuel mixture to the combustion cylinder (3A), and a return flow passage (8) for returning a portion of exhaust gas generated by the combustion of the air-fuel mixture in the combustion cylinder (3A) to the intake passage (6), wherein a merge portion (9) where the return flow passage (8) merges with the intake passage (6) is located downstream of a mounting position of the vortex control valve (10) between the mounting position of the vortex control valve (10) and the combustion cylinder (3A).

## Claims

1. A structure of an airflow control system, comprising:
a vortex control valve (10) located in an intake passage (6) and generating a vortex in a combustion cylinder (3A) upon intake of air-fuel mixture for combustion, the intake passage (6) supplying the air-fuel mixture to the combustion cylinder (3A); and
a return flow passage (8) for returning a portion of exhaust gas generated by the combustion of the air-fuel mixture in the combustion cylinder (3A) to the intake passage (6),
wherein a merge portion (9) where the return flow passage (8) merges with the intake passage (6) is located downstream of a mounting position of the vortex control valve (10) between the mounting position of the vortex control valve (10) and the combustion cylinder (3A).

2. The structure of the airflow control system according to Claim 1, wherein the vortex control valve (10) includes an induction mechanism for inducing the air-fuel mixture to one portion of the intake passage (6) in a radial direction of the intake passage (6) under a condition that a flow of the air-fuel mixture is throttled and the merge portion (9) is formed on a wall of the intake passage (6) so as to open in a direction of another portion of the passage (6) different from the one portion.

3. The structure of the airflow control system according to any one of Claim 1 and 2 further comprising:
a first plate member (2A) and a second plate member (2B) assembled on each other and located between a cylinder head (3) and an intake manifold (1), wherein the vortex control valve (10), the return flow passage (8) and the merge portion (9) are provided between the first plate member (2A) and the second plate member (2B).

4. The structure of the airflow control system according to Claim 3, wherein the first plate member (2A) and the second plate member (2B) respectively include a through hole H for forming the intake passage (6).

5. The structure of the airflow control system according to any one of Claim 3 and 4 further comprising:
a plate member (2A) located between a cylinder head (3) and an intake manifold (1),
wherein the vortex control valve (10), the return flow passage (8) and the merge portion (9) are provided on the plate member (2A).
